(19)

Europäisches
Patentamt

European
Patent Office

Office européen
des brevets

(11) **EP 4 604 057 A1**

(12) **EUROPEAN PATENT APPLICATION**

(43) Date of publication:
**20.08.2025 Bulletin 2025/34**

(21) Application number: **24158266.7**

(22) Date of filing: **19.02.2024**

(51) International Patent Classification (IPC):
**G06T 7/00** (2017.01)

(52) Cooperative Patent Classification (CPC):
**G06T 7/0012;** G06T 2207/10088;
G06T 2207/20084; G06T 2207/30004;
G06T 2207/30016; G06T 2207/30096

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Future Processing S.A.**
**44-100 Gliwice (PL)**

(72) Inventors:
• **NALEPA, Jakub**
**44-121 Gliwice (PL)**
• **RIBALTA LORENZO, Pablo**
**43-100 Tychy (PL)**

• **MARCINKIEWICZ, Micha**
**02-972 Warszawa (PL)**
• **KOTOWSKI, Krzysztof**
**44-200 Rybnik (PL)**
• **MACHURA, Bartosz**
**44-102 Gliwice (PL)**
• **DUDZIK, Wojciech**
**44-335 Jastrzebie-Zdroj (PL)**
• **WALCZAK, Maksym**
**9000 St Gallen (CH)**
• **MRUKWA, Grzegorz**
**43-267 Suszec (PL)**
• **BURDA, Izabela**
**44-100 Gliwice (PL)**

(74) Representative: **Marek, Joanna**
**ul. Wodzislawska 14**
**44-200 Rybnik (PL)**

(54) **METHOD FOR AUTOMATED ANALYSIS OF BRAIN TUMORS IN DYNAMIC CONTRAST-ENHANCED MAGNETIC RESONANCE IMAGES**

(57) A computer-implemented method of processing DCE-MRI scan images comprising a brain of a subject under study and comprising a brain lesion to detect and automatically segment (delineate) and extracting radiomic features from DCE-MRI image data as well as from parametric maps characterized in that quantifying functional characteristics of the lesion, and/or predicting the survival time of the patient under study, predicting the short, medium and long term clinical benefits of the current treatment in the subject.

Figure 2

# EP 4 604 057 A1

**Description**

**FIELD OF THE INVENTION**

The invention relates to method in the field of medical image analysis. It is particularly, but not exclusively, concerned with systems, apparatuses and methods for detecting and analyzing brain tumors in dynamic contrast-enhanced magnetic resonance (DCE-MR) images, as well as post-processing and quantitatively analyzing regions of interests (i.e., tumors) in such imagery.

**BACKGROUND OF THE INVENTION**

Gliomas are the most common primary brain tumors in humans. They are characterized by different levels of aggressiveness which directly influences prognosis as shown in publication S. Rasheed, K. Rehman, and M. S. H. Akash, "An insight into the risk factors of brain tumors and their therapeutic interventions" Biomedicine & Pharmacotherapy, vol. 143, p. 112119, 2021. Due to the gliomas' heterogeneity (in terms of shape and appearance) manifested in multi-modal magnetic resonance imaging (MRI), their accurate delineation is an important yet challenging medical image analysis task. However, manual segmentation of such brain tumors is very time-consuming thus cost-inefficient, and prone to human errors & human bias. It also lacks reproducibility and is affected by a high intra- and inter-rater disagreement, which adversely affect the effectiveness of patient's monitoring, and can ultimately lead to inefficient treatment (M. Parillo, et al. "Interrater reliability of Brain Tumor Reporting and Data System (BT-RADS) in the follow up of adult primary brain tumors: a single institution experience in Italy," Quantitative Imaging in Medicine and Surgery, vol. 13, no. 11, 2023.; M. Visser, et al. "Inter-rater agreement in glioma segmentations on longitudinal MRI," NeuroImage: Clinical, vol. 22, p. 101727, 2019). It is worth mentioning that MRI (with and without contrast bolus injected) is the investigative tool of choice for neurological cancers - for brain tumors, one can acquire multi-modal MRI, including T1-weighted (post-contrast and non-contrast), T-weighted, T2 Fluid Attenuation Inversion Recovery (T2-FLAIR) sequences, alongside diffusion and perfusion images. The structural information concerning the brain tumors does not, however, fully captures the characteristics of the lesions that might be useful in planning the treatment pathway for the oncological patients (J. E. Villanueva-Meyer, M. C. Mabray, and S. Cha, "Current clinical brain tumor imaging," Neurosurgery, vol. 81, no. 3, 2017.).

Dynamic contrast-enhanced imaging using dynamic contrast-enhanced magnetic resonance (DCE-MR) images is now employed in clinical settings as a non-invasive method to evaluate the vascular support of various tumors, thus to capture the functional characteristics of the imaged brain tumors (H. Bagher-Ebadian, et al. "Dynamic contrast enhanced (DCE) MRI estimation of vascular parameters using knowledge-based adaptive models," Scientific Reports, vol. 13, p. 9672, Jun 2023). The analysis involves examining a series of images acquired over time after the injection of contrast material (tracer), focusing on the temporal changes in attenuation within vessels and tissues. Biomarkers derived from such medical imaging have demonstrated correlations with physiological and molecular processes associated with tumor angiogenesis (Yankeelov E. Thomas and Gore C. John, "Dynamic Contrast Enhanced Magnetic Resonance Imaging in Oncology: Theory, Data Acquisition, Analysis, and Examples", Current Medical Imaging 2007; 3 (2)). This process is morphologically characterized by an increased number of micro-vessels that are challenging to image. Consequently, DCE biomarkers (quantifiable measures extracted from DCE-MR image data) prove valuable in appraising tumor characteristics and stage, offering an autonomous prognostic indicator for risk stratification in cancer patients. While DCE biomarkers have been successfully validated across various tumors like gliomas, glioblastomas, carcinoids, rectal, renal, and lung tumors, their extraction process is time-consuming and susceptible to user errors & bias. This is due to the necessity of manually segmenting the MR data, negatively affecting reproducibility - a crucial concern in clinical applications, especially for longitudinal studies, where objective and unbiased comparison of the lesion measurements in different time points is of paramount importance to effectively track and respond to the disease.

The extraction of DCE biomarkers from brain MRI involves segmenting tumors and determining the vascular input region, typically using clustering or intensive 3D processing to capture 3D spatial characteristics of the tissue within the scan. However, current approaches face computational complexity issues, relying on manual segmentation that hampers reproducibility, especially - as already mentioned - in longitudinal studies. This invention addresses, among others, these practical and scientific shortcomings of other methods by employing fast image-processing routines and 3D medical image analysis, aiming for fully-automated, reproducible segmentation in brain tumor analysis. Existing brain tumor segmentation methods fall into four categories - atlas-, image analysis-, machine learning-based, and hybrid techniques. Atlas-based methods use manually segmented atlases to segment unseen scans, relying on registration and facing challenges with diverse tumor characteristics, as they rely on the quality of the atlas (S. Bauer, et al. "Atlas-based segmentation of brain tumor images using a markov random field-based tumor growth model and non-rigid registration," in 2010 Annual International Conference of the IEEE Engineering in Medicine and Biology, pp. 4080-4083, 2010.; Z. Tang, et al. "Multi-atlas segmentation of MR tumor brain images using low-rank based image recovery," IEEE Transactions on Medical Imaging, vol. 37, no. 10, pp. 2224-2235, 2018). Image analysis-based algorithms, including thresholding and

2

region-growing techniques, struggle with heterogeneous tumors and noisy images (A. Wadhwa, A. Bhardwaj, and V. Singh Verma, "A review on brain tumor segmentation of MRI images," Magnetic Resonance Imaging, vol. 61, pp. 247-259, 20190). Conventional machine learning approaches offer advantages directly related to their nature (of such methods being data-driven), but they require heavy feature engineering, hence elaborating manually-designed features that would capture intrinsic brain tumor characteristics (M. Soltaninejad et al. "Automated brain tumour detection and segmentation using superpixel-based extremely randomized trees in FLAIR MRI," International Journal of Computer Assisted Radiology and Surgery, vol. 12, pp. 183-203, Feb 2017).

Deep learning models for brain tumor detection and segmentation encompass a range of network architectures, including ensembles (S. Alsubai, et al. "Ensemble deep learning for brain tumor detection," Frontiers in Computational Neuroscience, vol. 16, 2022.), fully-convolutional neural networks, such as U-shaped U-Nets (Zheng, X. Zhu, and W. Guo, "Brain tumour segmentation based on an improved U-net," BMC Medical Imaging, vol. 22, p. 199, Nov 2022), encoder-decoder-powered deep learning architectures, such as encoder-decoder convolutional neural networks (CNNs) (G. Dheepa and P. L. Chithra, "An efficient encoder-decoder CNN for brain tumor segmentation in MRI images," IETE Journal of Research, vol. 0, no. 0, pp. 1-12, 2022, DOI: 10.1080/03772063.2022.2098182), and many more, see e.g., M. F. Ahamed, et al., "A review on brain tumor segmentation based on deep learning methods with federated learning techniques", Computerized Medical Imaging and Graphics, vol. 110, p. 102313, 2023). Despite the steady growth of classic and deep learning, acquiring diverse, high-quality data with accurate ground truth is resource-intensive, extremely cost- and time-inefficient and subject to variability (M. Adewole, et al. "The brain tumor segmentation (BraTS) challenge 2023: Glioma segmentation in Sub-Saharan Africa patient population (BraTS-Africa)" 2023). Of note, privacy concerns hinder pooling multi-institutional datasets for model generalization. Recently, federated learning and evaluation challenges have arisen (Z. Liu, et al., "Fedcl: Federated contrastive learning for multi-center medical image classification," Pattern Recognition, vol. 143, p. 109739, 2023.) which allow for training over large training samples without the need of sharing such data across sites, thus effectively tackling the data privacy issues. Deep learning models, however, constitute an important step in the processing chain which is commonly exploited for semantic segmentation of medical images. This step, albeit virtually never being the final step in the processing pipeline, is of paramount importance, as its quality influences all other downstream tasks, such as extracting bidimensional or volumetric characteristics of the brain tumor in MRI, or the number of detected and delineated lung lesions in CT (J. Nalepa, et al., "Deep learning automates bidimensional and volumetric tumor burden measurement from MRI in pre- and post-operative glioblastoma patients," Computers in Biology and Medicine, vol. 154, p. 106603, 2023). On top of that, automating such user-dependent and tedious tasks allow for ensuring that they are fully-reproducible. This is pivotal to address the intra- and inter-rater variability issues which emerge in the vast majority of clinical scenarios which encompass delineating regions of interest in medical image data. Thus, there is a clear need for introducing standardized medical data analysis pipelines that are free from the aforementioned shortcomings.

Once the regions of interests, such as tumors, lesions, metastases, or even organs are delineated, one may extract quantifiable features to capture their various characteristics, directly connected to their shape, texture, voxels' intensities, and many others. Such feature vectors may be later fed to various machine learning models performing classification or prediction - they can be deployed in clinical settings to classify patients into high- and low-risk based on their clinical data, identify patients who require more aggressive or fine-tuned treatment pathways, or to perform prognosis & survival prediction. In this context, radiomics stands out as a quantitative approach widely utilized for monitoring medical conditions. It provides a collection of standardized features aligned with the Imaging Biomarker Standardization Initiative (IBSI) (A. Zwanenburg, M. Vallieres, et al., "The Image Biomarker Standardization Initiative: Standardized Quantitative Radiomics for High-Throughput Image-based Phenotyping," Radiology, vol. 295, no. 2, pp. 328-338, 2020), known for their interpretability. As an example, recent research in liver computed tomography (CT) analysis has delved into various diseases, such as predicting cirrhosis (J.-C. Wang, et al., "A radiomics-based model on non-contrast CT for predicting cirrhosis: make the most of image data", Biomarker Research, vol. 8, p. 47, Sep 2020), anticipating hepatocellular carcinoma recurrence after resection (W. Ji, et al., "Machine-learning analysis of contrast-enhanced CT radiomics predicts recurrence of hepatocellular carcinoma after resection: A multi-institutional study", eBioMedicine, vol. 50, pp. 156-165, Dec 2019), and distinguishing between low- and high-grade fibrosis (B. K. Budai, et al., "Three-dimensional CT texture analysis of anatomic liver segments can differentiate between low-grade and high-grade fibrosis", BMC Medical Imaging, vol. 20, no. 1, p. 108, 2020). Similarly, in brain tumor imaging, radiomics has been used for e.g., characterizing specific tumor areas. However, Singh et al. raised concerns about the standardization of the radiomic-powered processing pipelines, and noted that the lack of standardization and inconsistent methodology between working groups have made validations of such techniques unreliable (G. Singh, et al., "Radiomics and radiogenomics in gliomas: a contemporary update", British Journal of Cancer, vol. 125, pp. 641-657, Aug 2021). Although the radiomic analysis has indeed potential in imaging guidance in brain tumor care and radiotherapy (A. M. Aldawsari, et al., "The role and potential of using quantitative MRI biomarkers for imaging guidance in brain cancer radiotherapy treatment planning: A systematic review" Physics and Imaging in Radiation Oncology, vol. 27, p. 100476, 2023), to our knowledge, exploiting such techniques for DCE-MRI analysis is under-researched, and relates to e.g., characterization of tissues in an animal brain tumor model (H. Bagher-Ebadian, et al. "Radiomics characterization of tissues in an animal brain tumor model imaged using dynamic contrast enhanced (DCE) MRI", Scientific Reports, vol. 13, p. 10693, Jul 2023) or radiomics-based evaluation and possible characterization of DCE perfusion derived different sub-regions of glioblastoma (Suhail Parvaze et al., "Radiomics-based evaluation and possible characterization of dynamic contrast enhanced (DCE) perfusion derived different sub-regions of glioblastoma", European Journal of Radiology, vol. 159, p. 110655, 2023). On top of that, despite these advancements in radiomics, the interpretability of these features is challenged by their often extensive number, reaching thousands. Consequently, there is a pressing need to develop a computer-aided end-to-end solution that enhances interpretability and offers reproducible analysis of DCE-MRI data captured from brain tumor subjects. This could significantly assist clinicians in better designing the treatment pathway, in building a holistic view of the tumor progression, as well as extracting features that quantitatively assess the tumor characteristics in 4D imagery containing a temporal series of 3D MRI post-contrast scans.

In the following subsections, we thoroughly review the patent applications that relate to the present invention. We not only enumerate the patents that relate to our invention, but also highlight the most important differences between them.

### *Enhancing the quality of medical image data*

In US11593940B2, a system for standardized processing of MR images was proposed, encompassing several embodiments that relate to image processing, and particularly, to a system and methods that may be used to generate standardized MR images. Here, the authors focused on generating higher-quality medical images that may be used to enhance various downstream tasks that operate on such imagery. In a general context, a technique for processing a digital magnetic resonance (MR) image volume derived from an image dataset was introduced. The process involves performing intensity standardization, where intensity values of the digital MR image volume are scaled based on an image volume scaling factor. This scaling is carried out to align an image volume landmark within a volume histogram of the MR image volume with a reference volume landmark retrieved in a reference histogram of a reference volume. The scaled MR image volume is then divided into multiple scaled MR slices. For each of these slices, an image slice histogram is generated. Subsequently, an image slice landmark is determined from the respective histogram. Finally, a scaled and shifted MR slice is produced by adjusting the intensity values of the slice. This adjustment involves shifting the image slice intensity values by an image slice shifting factor, ensuring alignment of the image slice landmark with the image volume landmark. The outcome is the creation of a scaled digital MR image volume. This invention may be indeed exploited in a variety of automated data processing pipelines in order to improve the quality of input imagery. It, however, did not focus on automated analysis of medical image data in downstream tasks related to the oncological patient care, and especially related to the analysis of contrast-enhanced MRIs in brain tumor analysis and treatment.

### *Transfer and storage of medical image data*

In US10872684B2, the authors noted that accurate medical treatment relies on previous experience and data from clinical trials and systems which inform and advance patient care. Therefore, efficient and effective storage and transfer of medical data are of critical importance nowadays, especially in the context of ensuring the non-functional characteristics of these operations (with special emphasis put on their security). To tackle these issues, the authors introduced a system, in which certain aspects of the invention may encompass systems, methods, and/or computer-readable media. Their invention may manifest as a computer-implemented method designed for the analysis and dissemination of medical information, and thus may encompass several steps, such as receiving the medical data by a subsystem, aggregating such data, handling various queries toward traversing medical data, as well as analyzing the available data, generating reports and transmitting the results to the relevant entity or user. To input the data into the system, the authors suggested one or more mobile tablets to be included in the system, serving as input devices for entering medical data that are later stored on the storage devices (and may be further aggregated and analyzed and processed by computers equipped with specialized processors). This invention focused on the aspects related to inputting, transferring and storing medical image data, without the emphasis on specific analysis and processing of medical images, especially related to dynamically-enhanced imagery and/or extracting radiomic features from such imagery to tackle downstream tasks related to disease detection, progression analysis and others, directly related to quantitative analysis of such imagery.

### *Systems and methods for medical image segmentation*

Accurate segmentation of medical images, being the process of delineating regions of interest in a digital image for e.g., detecting tumorous regions within the tissue in the organ of interest (WO2020076135A1), is critical in oncological care and during radiotherapy planning, and can be performed using an array of medical image modalities and targeting different organs (as presented in the invention introduced in WO2017106280A1). To segment a medical image, it should be received by a segmentation module from the acquisition device or from the medical storage server, such as Picture Archiving and Communication System (PACS). In the embodiments of US10769791B2 (CN109410188A), the authors disclosed a system for segmenting a medical image from multi-modal MRI medical images which included a communication interface (receiving the medical image acquired by an image acquisition system or device), a memory module which stores multiple artificial intelligence learning networks trained for segmentation (they are jointly trained using the first imaging modality, and then the second imaging modality), as well as the processor configured to segment the medical image using a segmentation network selected from the plurality of the aforementioned learning networks. This invention, however, does not consider analyzing 4D medical image data (multiple medical image volumes captured in consecutive time points), it does not include any module capable of extracting discriminative features that would be used for further analysis, classification or prediction, and it does not reveal any module for generating human readable reports that could be saved in the storage medium to ensure full traceability of the medical image analysis process.

The authors of CN112419247A revealed an invention for brain tumor detection in MRI clinical data. The authors proposed a method and system for this task, exploiting routinely acquired MR diagnostic images, such as T1, T2, FLAIR and DWI, and the system was aimed at single brain metastases and gliomas. The method for detecting brain tumors in such imagery was based on machine learning, where - for each MR sequence, a gray-level co-occurrence matrix in multiple directions was constructed from the cross-sectional, coronal and sagittal MR planes. These co-occurrence matrices were treated as feature extractors, and together with spatial relationship features were fed into the feature selection module which outputted the reduced feature vectors used by support vector machines for tumor delineation. This invention focused purely and only on delineating the tumors in multi-modal MR scans - albeit this step is indeed of paramount importance, delineating tumors is an intermediate step in an end-to-end pipeline for extracting discriminative features that would allow for providing personalized patient care, as well as for monitoring the progression of the disease in a fully reproducible and quantifiable manner.

In the invention reported in CN116664590A, the authors provided an automatic segmentation method based on dynamic contrast-enhanced magnetic resonance images, which can be suitable for automatic segmentation of small organs and tumors and was reported to achieve better segmentation results than some selected competitors. This technical solution included several steps, encompassing the delineation of the gold standard for segmentation of pituitary gland and pituitary microadenoma based on DCE-MRI images, processing the DCE-MRI in such a way that the middle three slices and the last five dynamic phases are stacked as two-dimensional image data (stacked at different levels of the same phase into volume data in spatial order), using all the slices containing pituitary/microadenomas and combining the same position and different phases together. Ultimately, this invention created a four-dimensional image volume that are fed into deep learning models (ResUnet and SwinUnetr) that perform segmentation, and the Dice similarity coefficient was exploited as an evaluation index to quantify the segmentation performance. As in the previously-discussed invention, this one focused purely on delineating small organs and tumors from DCE-MRI clinical data, hence cannot be considered an end-to-end processing chain for providing personalized patient care through extracting and analyzing quantitative characteristics of regions of interests images using such contrast-enhanced medical imagery.

*Systems and methods for extracting quantifiable features from dynamic contrast-enhanced magnetic resonance images*

Extracting quantifiable information from multi-modal 4D MRI data (i.e., 3D MRI volumes captured for a patients in a number of consecutive time points, commonly after injecting a contrast bolus) plays an important role in quantifying various physiological and structural parameters of the tissue. By accurately measuring the signal intensity over time, i.e., in the aforementioned consecutive time points, and fitting it according to a certain mathematical model, an array of various perfusion parameters, such as blood volume, blood flow, or mean transit time, can be calculated to track and monitor the disease. Such 4D MRI data is commonly analyzed manually (following a visual inspection performed by a clinical or a medical physicist to delineate the region of interest, for which the perfusion parameters are to be quantified) or semi-automatically. These approaches, however, suffer from the lack of reproducibility, they are tedious, time-consuming thus cost-inefficient. To tackle those challenges, the authors of CN114359262A revealed a device and method for obtaining outflow effect parameter based on perfusion images. In order to address the error problem caused by measuring the outflow effect directly from the change of the signal value of the acquired image in the prior art, the invention disclosed in CN114359262A suggested to measure the outflow effect through the residual function curve obtained during the post-processing of the perfusion image (which may be either MR or CT). The device comprised several functional units with well-defined capabilities - these units included a perfusion imaging unit, built to continuously acquire an MR perfusion image or a CT perfusion image of a region of interest covering an arterial vessel within a period of time in consecutive time points to acquire the perfusion image data that undergoes further analysis and processing, an arterial input function acquisition unit, exploited to simultaneously and continuously acquire the arterial input function in the reference arterial region within the segment of interest, a time-phase correction unit co-registering the time-phase image of the perfusion image of each time point to the first time-phase image in the temporal series of acquired images, so that the position of each tissue in each consecutive time point is the as in the firstly acquired perfusion image, an image quality inspection unit that identifies the artifacts within the images, and - if the artifacts exceed a specific threshold - the captured image is deleted, a conversion unit performing data processing on a perfusion image in each time point to obtain the contrast agent concentration image, a residual function acquisition unit, and the outflow effect parameter generation unit which ultimately generated outflow effect parameters based on the wash-out average rate, wash-out shaded area, and the area under the curve. This invention purely focused on quantitative post-processing of the perfusion image of CT or MR to measure a selected and specific parameter, being the outflow effect of the tissue. It does not, however, consider extracting other features of such imagery, e.g., capturing its structural or other functional characteristics that could be used to disease monitoring, analyzing the tumor tissue and its structural characteristics, as well as this invention did not automate the process of delineating regions of interest, such as the aforementioned brain tumors in MRI data, to ensure reproducibility of this pivotal analysis process. Also, this invention did not report any reporting modules or data storage and transmission modules that would allow for transferring the outputted reports for further investigation, analysis, storing and versioning of clinical records.

In a similar vein, the authors of US2021169349A1 revealed several embodiments which capture the system for tumor characterization and outcome prediction through quantitative measurements of tumor-associated vasculature. In their invention, the most important embodiments included apparatus, systems, operations and methods that are proposed to predict neoadjuvant therapy response and/or disease prognosis using a computational approach based on quantitative imaging features describing the morphology, spatial organization, and function of tumor associated vasculature. This invention was showed that it can identify, extract, and/or analyze properties of the tumor-associated vessel network, such as its shape and enhancement profile, and generate a prediction of response, to facilitate identifying patients who will respond to neoadjuvant therapy before administration of treatment and/or to determine a prognosis for the particular tumor of interest. Specifically, the modules of the system included the accessing medical imaging module, a module for segmenting tumor-associated vasculature associated with the tumor, a module for extracting one or more features from the tumor-associated vasculature (e.g., morphological features, spatial organization features or functional features), a module for providing and for receiving the extracted features to and from a trained machine learning model for predicting response to a treatment for the tumor or a prognosis of a tumor. This invention, however, focused on the vasculature of the tumor which was isolated from subtraction images with a specialized filtering approach to detect vessel-shaped objects, whereas the portion of the tumor had to be manually delineated within the scan. It does not focus on quantitative and reproducible reporting of the outcomes of the analysis, as well as on automatic feature extraction and combining and enhancing the feature space with the use of radiomic features extracted for various areas of the MRI scans and parametric maps calculated for the MRI scans acquired in time points after injecting the contrast bolus.

In the invention described in WO2019190641A1, the authors combined deep learning algorithms for delineating regions of interest with simple features for evaluating dynamic medical data. As per the presented system, a method for analyzing dynamic data in real-time (or from the database of stored medical images), generated by an imaging modality during a scanning procedure, was outlined. The method involves the real-time acquisition of dynamic data from a subject through a data acquisition unit (e.g., a scanner). Additionally, the method encompasses the acquisition, via the same transferring unit, of a deep learning model designed to process the medical dynamic data. This model, based on a neural network trained with previously acquired dynamic medical images, is configured to determine aspects such as the functional status of an anatomical region, the physiological status of a region of interest, and clinical parameters for generating or supporting a clinical decision. Moreover, the method includes the real-time processing of dynamic data using the deep learning model through a deep learning unit to generate at least one feature value indicative of the subject's medical status that could be used in clinical settings. It further involves the automatic generation of a medical recommendation corresponding to the medical status by an appropriate recommendation unit. Finally, the method includes presenting the medical recommendation through a display unit to the end-user of the disclosed system, e.g., a clinician or physician, facilitating the provision of medical care to the subject. This invention, however, did not focus on extracting features that could capture both functional and structural information concerning the region of interest, i.e., a tumorous region and/or its vascularization, as well as did not include the modules that would allow to perform automatic brain extraction and analysis from brain DCE-MRI data, modules that would allow to export, transmit and store standardized reports that are pivotal to objectively track the disease in an unbiased way, as well as did not incorporate any feature selection technology to determine the most discriminative features and to decrease their number for avoiding overfitting of classification or regression machine learning models and enhancing interpretability.

In WO2019241266A1, the authors indicated that there currently is no automated standardized quantitative method for DCE-MRI post-processing and analysis. To address this issue, the disclosed invention was aimed at standardizing, automating and translating quantitative DCE-MRI biomarkers for the assessment of brain tumor response to therapy in clinical neuro-oncology trials. Especially, this system focuses on ensuring standardization of automated analysis tools needed for multi-center neuro-oncology clinical trials, and on automating the extraction of threshold values to differentiate pseudo-progression from true progression in individual lesions analyzed using such imagery. In particular, the authors provided a new high-resolution whole-brain quantitative DCE-MRI scan protocol and standardized, automated data processing tool that is well-suited for multi-center clinical neuro-oncology trials. The system and apparatus included several components and sub-systems, spanning across a magnetic resonance imaging subsystem and a controller subsystem to perform T2*-weighted dynamic susceptibility contrast MRI. The control subsystem is operable to execute the calibration scans and determine MRI biomarkers from magnetic resonance images obtained from the analyzed subject. The calibration scans included B1+ mapping, and pre-contrast Ti mapping with spatial resolution and coverage that matched an area from which the magnetic resonance imaging data is obtained. Of note, the control subsystem included one or more computers running algorithms to construct the magnetic resonance images and calculating biomarker values and/or determining prognosis or optimal treatment protocols - these MRI biomarkers included tracer kinetic parameters obtained from a tracer kinetic model. In a refinement of the invention, the control subsystem is additionally operable to denoise the magnetic resonance images. This invention, however, did not include automated segmentation and analysis of brain tissue, as well as tumorous regions of interest which could be further investigated through the extraction of novel biomarkers based on radiomic features, and did not include the feature selection technology in this context that would determine the most discriminative and important features to avoid memorizing the training data and to enhance the interpretability of the feature sets. Also, providing a reporting and transfer module is necessary to incorporate such automated DCE-MRI analysis into a standard clinical setting and protocol, and to allow for further longitudinal analysis of the obtained results for a single or for a number of scanned subjects.

### Clinical decision support systems

Clinical decision support (CDS) systems are expert systems, commonly powered with specialized processors and modules able to process and analyze medical image, textual, clinical and other data, intended to offer automated aid to healthcare professionals, including physicians, in the process of making medical decisions. These decisions encompass aspects such as diagnosing ailments, selecting treatments, and implementing various elements of a treatment plan. In EP2419849A2, the authors introduced the apparatuses and methods in their disclosed CDS system, comprising a case grouping sub-system including a graphical user interface. The entire system was designed to concurrently present data illustrating a variety of patient cases, allowing users to group selected cases into clinically related groups that might be useful during the analysis process. The system includes a sub-system for determining features that align with these groups as well. The user interface receives current patient data, processes it to identify features, and outputs relevant clinical decision support information. As for the disclosed CDS method, it involves providing a graphical user interface for user-driven grouping of patient cases into clinically related groups, represented graphically by specific patient case icons. Probative features correlating with these groups are determined, and clinical decision support information is automatically provided based on current patient data, utilizing values of the probative features. Furthermore, a disclosed storage medium contains executable instructions for a digital processor to implement the described CDS method. This generic invention, however, did not consider dynamic contrast-enhanced imagery, extraction of radiomic features from medical image data that could be used for tracking and classifying the disease in a personalized care approach, as well as did not consider the reporting modules that would extract standardized and comparable analysis records.

Based on the above-presented analysis of the state of the art (scientific journals & conferences, as well as patent databases), there is a need for automated & standardized quantitative methods for DCE-MRI post-processing and analysis that would offer reproducible and objective assessment of subjects scanned with DCE-MRI data. This invention addressed this research and development gap, and its embodiments are discussed in detail in the following sections.

### STATEMENTS OF INVENTION

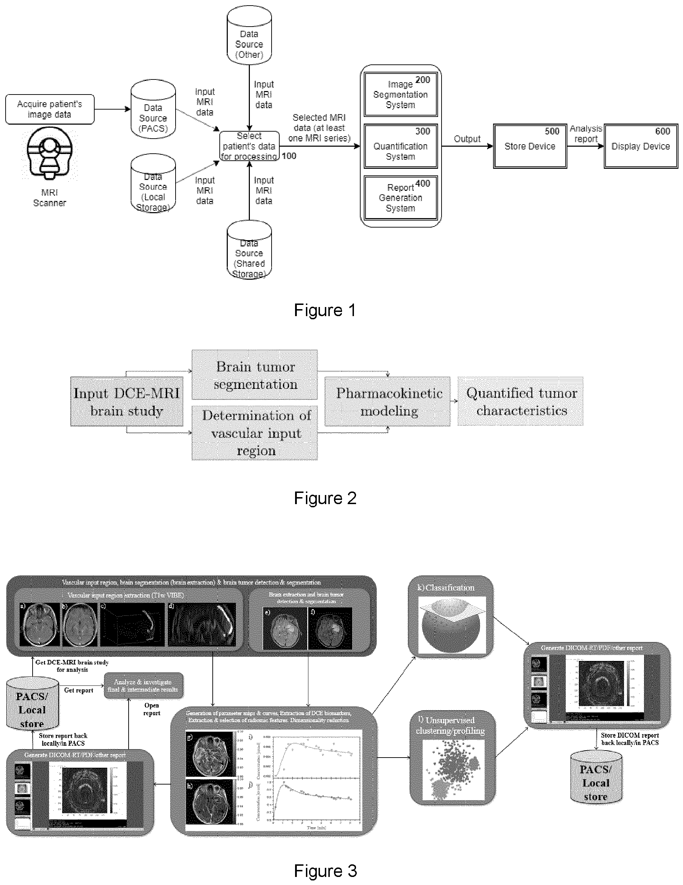

The present invention discloses a method for automated analysis of brain tumors imaged using dynamic contrast-enhanced multi-modal magnetic resonance imaging (DCE-MRI), with its high-level architecture rendered in Figures 1 and 3 (the detailed embodiments are detailed in the further parts of this document). The prior art methods for DCE-MRI brain tumor analysis are problematic and suffer from the lack of reproducibility, they do not comprehensively tackle the analysis process through extracting structural and functional characteristics of the tumor captured in dynamic contrast-enhanced imagery thus do not fully exploit the potential of such 4D medical image data, do not comprehensively extract features from both organ (brain) and region of particular interest (brain tumor), do not ensure interpretability of extracted features through automatic selection of the most discriminative features for disease classification and/or disease progression tracking and/or survival predictions. Consequently, it is impossible to obtain objective, reproducible and quantifiable metrics and biomarkers from DCE-MRI acquired for brain tumor patients for designing precise treatment pathways targeting specific patients.

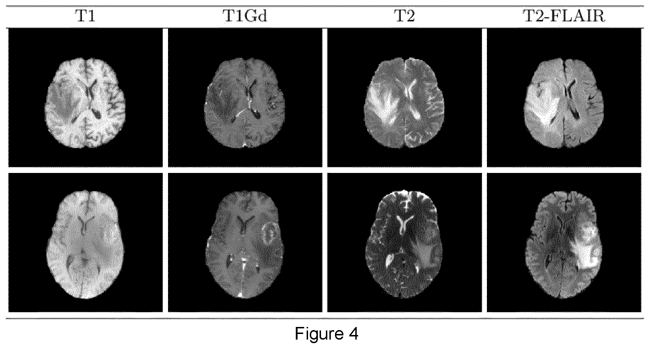

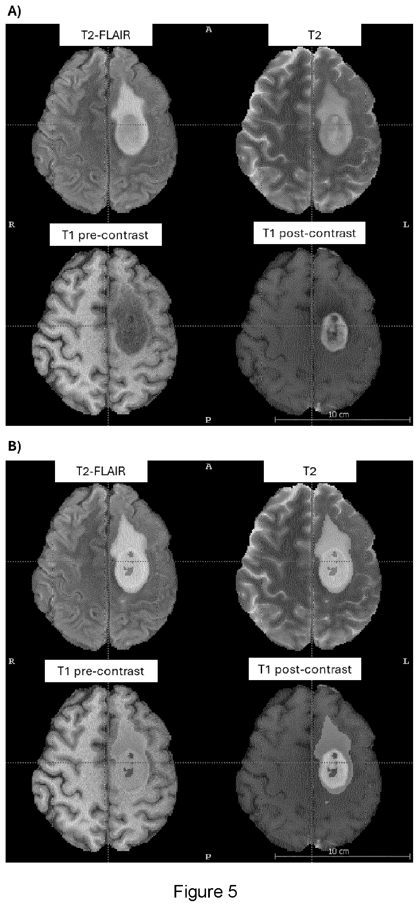

The present invention discloses the system comprising pivotal processes and methods executed by the modules of the system without any user intervention thus being free from human errors and potential human bias. The modules include the communication module, the DCE-MRI data selection module for selecting the DCE-MRI for analysis (module 100 in Figure 1), segmentation module (whose aims is to automatically and objectively delineate brain tissue, Figure 4, brain lesion, Figure 5, as well as the vascular input function which is pivotal for further pharmacokinetic modeling, Figure 2; the segmentation module is collectively understood at the Image Segmentation System in Figure 1, Module 200), radiomics module for extracting and selecting radiomic features as well as for elaborating latent embedded representations of the data, supervised and unsupervised machine learning modules for performing classification, regression and unsupervised clustering of the extracted radiomic features (these modules are collectively understood as the Quantification System, module 300 in Figure 1), report generation module (module 400 in Figure 1, referred to as the Report Generation System) and transmission module (the segmentation module, radiomics module, report generation module are deployed over one or more physical processors whereas the communication module involves a physical module responsible for the transmission and storage, module 500 in Figure 1, of anonymized medical images as well as generated reports which are later stored in one or more appropriate physical storage medium and may be accessed and further analyzed using a display device of one's choice, as visualized in Figure 1 through Module 600).

## DESCRIPTION OF THE DRAWINGS

Figure 1. Architecture of the invention presenting the pivotal components and modules necessary to perform end-to-end, automated and reproducible analysis of DCE-MRI data for oncological brain tumor patients. The processing may be performed on one or more distributed processors and the processing modules (100, 200, 300, 400) correspond to the processing units of the invention for which the DCE-MRI selection and pre-processing, automated delineation of regions of interest, automated extraction, selection and dimensionality reduction of radiomic features and generating the output reports, respectively. The results are stored in a store device (500) and may be visualized and further analyzed by a means of a display device connected, through the connection and transmission medium to the storage.

Figure 2. A simplified view of the module for automated analysis workflow in brain tumor DCE-MRI including a method for detecting and segmenting brain tumors in MRI data (single- or multi-modal) as well as determination of vascular input region, pharmacokinetic modeling and extracting quantifiable numerical characteristics of the region of interest, i.e., tumor, using automated feature extractors and radiomics.

Figure 3. A high-level visualization of a concrete instance of the invention, being a system and method for processing and analysis of DCE-MRI data. Automated Dynamic Contrast-Enhanced Magnetic Resonance Imagining analysis - Vascular input region (VIR) from T1w VIBE: a) T1w VIBE image, b) candidate VIR regions, c) 3D rendering of VIF after pruning false-candidates, d) 3D rendering of VIR segmented using the invention; Brain tumor delineation (multimodal: T2, T1 pre-contrast, T1 post-contrast, T2-FLAIR or single-modal): e) Original MR image. f) Original MR image with the automatic segmentation using nnU-Net (with the quality of segmentation quantified as DICE=0.954 with respect to the ground truth delineation). Generation of parameter maps, curves, DCE biomarkers extraction: g) Values of Ktrans and h) ve are the results of fits of the Tofts' model (pixelwise), superimposed onto the original image. i) The points represent an average contrast concentration in the area of the tumor, the curve represents the fit of the model. j) The points are an average contrast concentration within the vascular input region, the curve is the corresponding fit. The vascular input region segmentation and tumor delineation can be executed in parallel using separated and distributed processors to speed up processing. The radiomic features extracted within the system from the regions of interest (the brain, a brain lesion, parametric maps or a combination of those) are fed into the supervised classification engine or an unsupervised clustering engine for elaborating the prediction in the specific downstream task (e.g., predicting the survival of the patient) as well as for profiling the patients through assigning then a cluster label based on the historical available DCE-MRI data (k and l, respectively). The results of the analysis are exported to a report (e.g., in DICOM-RT, PDF or other format) and stored in the storage medium for further analysis, either locally or after transferring the report via the transmission link.

Figure 4. Example MRI sequences (T1 pre-contrast, T1 post-contrast, T2-weighted and T2-FLAIR) obtained for two oncology patients after the brain extraction (also referred to as skull stripping). The resulting images do not contain the skull.

Figure 5. Example MRI sequences A) T2-FLAIR, T2-weighted, T1 pre-contrast and T1 post contrast obtained for an oncology patient together with the corresponding segmentation masks obtained using an nnU-Net method delineating the tumor's subregions (green - peritumoral edema, yellow - enhancing tumor, red - necrotic and non-enhancing tumor core). The DICE coefficient amounted to 0.98990 (enhancing tumor), 0.99232 (tumor core), and 0.98318 (whole tumor, being all tumorous tissue areas), indicating a high agreement between the automatically obtained segmentation masks and the ground-truth segmentation masks for the classes of interest in this brain lesion.

## EMBODIMENTS

### Introductory remarks

The subsequent detailed descriptions include sections expressed in terms of algorithms and symbolic representations depicting operations on data bits within memory. These algorithmic descriptions and representations serve as a means for experts in the field to communicate the essence of their work to others. In this context, an algorithm is conceptualized as a sequence of operations leading to a specific outcome. These operations might involve physical manipulations of physical quantities, often taking the form of electrical or magnetic signals that can be stored, transferred, combined, compared, and manipulated within a logic or circuit.

The tangible outcome of these physical manipulations is a concrete and useful real-world result. While it has become customary, primarily for the sake of common usage, to refer to these signals as bits, values, elements, symbols, characters, terms, numbers, and so forth, it is crucial to recognize that these terms are labels applied to the corresponding physical quantities. Unless explicitly stated otherwise, it is understood that terms such as processing, computing, calculating, extracting, elaborating, determining, and the like, throughout the description, pertain to actions and processes carried out by a computer system, apparatus, logic, circuit, processor, or similar electronic device, manipulating and transforming data represented as physical (electronic) quantities.

Processors may encompass a mix of general-purpose processors and specialized processors (e.g., graphics processors, commonly applied to efficiently train and execute deep learning-powered systems and devices, application processors, programmable units, etc.). These processor units, whether singular or multiple, can be linked with and/or include memory or storage. They are designed to execute instructions stored in the memory or storage, facilitating the performance of various operations by apparatus, applications, systems, or operating systems. The memory or storage devices may consist of main memory, disk storage, or any appropriate combination thereof. The memory or storage components are not limited to specific types and can include any form of volatile or non-volatile memory, such as dynamic random access memory, electrically erasable programmable read-only memory, static random-access memory, Flash memory, solid-state storage, and others.

The following points present the embodiments of this invention.

### Embodiment 1

The method, according to the invention, running on a physical processor(s) for processing DCE-MRI data of brain tumor oncology patients for extracting quantifiable structural and functional features of the lesion. The method comprising the steps of receiving at least two or more DCE-MRI scans of a subject acquired in consecutive time points after injecting the contrast agent for a subject and pre-processing the received DCE-MRI scan images, wherein pre-processing comprises selecting one or more MRI sequence(s) for processing, as well as optionally co-registering MRI sequences to a selected MRI sequence if MRI sequences are not co-registered and normalizing the MRI images. The co-registration step executed optionally if the sequences are not already co-registered involves co-registering the remaining at least one MRI sequence image with the selected reference MRI sequence image and it comprises performing a rigid co-registration and/or a deformable co-registration and/or any combination thereof. After the pre-processing of the two or more DCE-MRI studies the selected and co-registered DCE-MRI studies are obtained and are ready for further analysis. Standardizing the input DCE-MRI study is performed for each MRI sequence separately using the z-score normalization method with the parameters of the method obtained based on the training DCE-MRI studies (images) stored in a storage medium, e.g., local disk drive, PACS server or any other storage medium. The z-score normalization method transforms a value of input voxel x into its standardized value x' according to the following formula:

$$x' = (x - \mu)/\sigma,$$

where $\mu$ denotes the mean voxel value within the MRI sequence undergoing normalization whereas $\sigma$ is the standard deviation of the voxel values within the MRI sequence undergoing normalization. As an effect of the operations executed in the pipeline presented in this embodiment one obtains at least two or more DCE-MRI scans of a subject acquired in consecutive time points after injecting the contrast which are co-registered and pre-processed where pre-processing includes standardization of the received and selected DCE-MRI scans of a subject.

### Embodiment 2

The computer-implemented method of training an artificial neural network, according to the invention, including the optimization of the network parameters and training hyperparameters is disclosed, the method comprising the steps of:

a) receiving at least one image from multi-modal MRI brain scan sequences encompassing one or more MRI sequences out of the following MRI sequences: T2-FLAIR, T2, T1 pre-contrast MRI sequence, T1 post-contrast sequence with the assumption that at least T2-FLAIR sequence is always available, where at least one image slice within the input MRI scan comprises at least one object of interest being the brain tumor lesion; b) receiving a ground-truth pixel-based annotation, with labels at the pixel/voxel level containing one or more brain tumor class labels: enhancing tumor, peritumoral edema, necrotic and non-enhancing tumor core, collectively understood as the whole tumor class label, as well as the background class label, of the received at least one MRI image, where the pixel-based annotation comprises a ground-truth segmentation mask for the at least one object of interest; c) obtaining a predicted segmentation mask by feeding the at least one received image to a prediction function, where the prediction function is defined by randomly initialized model parameters; d) calculating the loss value using a training function, when the predicted segmentation mask and the ground-truth segmentation mask of the annotation are given as input to the training function; e) optimizing the model parameters by minimizing the loss with respect to the trainable model parameters; f) replacing the model parameters with the optimized model parameters. In an embodiment, one or more artificial neural networks can be trained and if more than one artificial neural network is trained the ensemble of artificial neural networks is assembled, and predictions elaborated using separate artificial neural networks are combined together using an aggregation function wherein aggregation may be realized by the majority voting for each voxel, the average voting, the weighted average voting where the weights correspond to the performance of the base artificial neural networks quantified by the Dice similarity coefficient on the training set of MRI images. In an embodiment, one or more artificial neural networks are selected from a plurality of artificial neural networks such as U-Nets (nnU-Nets), convolutional neural networks with and without residual connections (ResNets), densely-connected convolutional neural networks and other architectures trained over the same training MRI scans or different subsets of the available training MRI scans following random sampling strategy of elaborating subsets of MRI scans for separate training. As an effect of the operations presented in this embodiment one obtains one or more trained artificial neural networks of the same or different architectures with updated trainable parameters such as kernel weights, biases any other trainable parameters dependent on the underlying artificial neural network architecture and if more than one artificial neural network was trained then the ensemble of artificial neural networks is obtained, and predictions elaborated using separate artificial neural networks are combined together using an aggregation function.

**Embodiment 3**

The computer-implemented method of training an artificial neural network, according to the invention, including the optimization of the network parameters and training hyperparameters is disclosed, the method comprising the steps of: a) receiving at least one image from multi-modal MRI brain scan sequences encompassing one or more MRI sequences out of the following MRI sequences: T2-FLAIR, T2, T1 pre-contrast MRI sequence, T1 post-contrast sequence with the assumption that at least T2-FLAIR sequence is always available, where at least one image slice within the input MRI scan comprises at least one object of interest being the brain; b) receiving a ground-truth pixel-based annotation (with labels at the pixel/voxel level containing one class of brain tissue label as well as the background class label) of the received at least one MRI image, where the pixel-based annotation comprises a ground-truth segmentation mask for the at least one object of interest; c) obtaining a predicted segmentation mask by feeding the at least one received image to a prediction function, where the prediction function is defined by randomly initialized model parameters; d) calculating the loss value using a training function, when the predicted segmentation mask and the ground-truth segmentation mask of the annotation are given as input to the training function; e) optimizing the model parameters by minimizing the loss with respect to the trainable model parameters; f) replacing the model parameters with the optimized model parameters. In an embodiment, one or more artificial neural networks can be trained and if more than one artificial neural network is trained the ensemble of artificial neural networks is assembled, and predictions elaborated using separate artificial neural networks are combined together using an aggregation function wherein aggregation may be realized by the majority voting for each voxel, the average voting, the weighted average voting where the weights correspond to the performance of the base artificial neural networks quantified by the Dice similarity coefficient on the training set of MRI images. In an embodiment, one or more artificial neural networks are selected from a plurality of artificial neural networks such as U-Nets (nnU-Nets), convolutional neural networks with and without residual connections (especially belonging to the family of ResNet artificial neural networks), densely-connected convolutional neural networks and other architectures trained over the same training MRI scans or different subsets of the available training MRI scans following random sampling strategy of elaborating subsets of MRI scans for separate training. As an effect of the operations discussed in this embodiment one obtains one or more artificial neural networks with updated trainable parameters according to the discussed training procedure performed in a supervised learning regime. If more than one artificial neural networks are trained then one obtains an ensemble of trained and updated artificial neural networks whose predictions are aggregated using the aggregation function.

### Embodiment 4

The method according to the preceding two embodiments is disclosed, where the aforementioned steps are performed sequentially with the steps c)-f) are performed for more than one training epoch. After each training epoch, a new machine learning model is obtained with its trainable weights updated and after performing the operations presented in the above-discussed embodiments for more than one training epochs one obtains the machine learning model with updated trainable parameters where each training epoch causes updates in all or a subset of all trainable parameters of one or more machine learning models.

### Embodiment 5

The method according to any of the preceding embodiments is disclosed, where the one or more images are obtained from any combination of native T1-weighted, post-contrast T1-weighted, T2-weighted and T2-Fluid Attenuated Inversion Recovery (T2-FLAIR) MRI sequences, including single sequences, groups of two sequences, groups of three sequences and/or all four sequences. Therefore using one or more images obtained from any combination of the above-mentioned MRI sequences results in obtaining one or more machine learning models using artificial neural networks for segmenting (automatically delineating) input MRI scans containing the same set of MRI sequences as used for training the underlying machine learning models. If input MRI scans contain more MRI sequences then appropriate MRI sequences are selected and undergo further processing by feeding them into the trained machine learning model. If input MRI scans contain less MRI sequences i.e., if some sequences are missing then the missing sequence is replaced by an empty image containing zeroed voxels.

### Embodiment 6

The computer-implemented method of determining the vascular input region, according to the invention, in a temporal series of one or more co-registered T1 post-contrast MRI sequences is disclosed, where the high-intensity voxels are first determined in the T1 post-contrast MRI sequences following a thresholding method wherein the threshold Tr is determined for each T1 post-contrast MRI sequence separately and is related to the maximum voxel's intensity within the input T1 post-contrast MRI sequence and Tr is no less than 75% of the maximal voxel's intensity. The method incorporates removing false-positive highly-intensive voxels which might be retained after applying the above-mentioned threshold where only highly-intensive voxels retained after thresholding with the threshold Tr and positioned in the low part of the T1 post-contrast MRI sequence corresponding to the G, H and I sections of the brain in the Talairach coordinates. The method comprises applying shape characteristics of the retained highly-intensive regions through using region eccentricity, being the minimum radius of the region divided by the maximum region of the region, (the shape factor, being the area of the region divided by the perimeter of the region) to determine the vascular input region in each slice of the input T1 post-contrast MRI sequence. The method comprises performing 3D analysis across the separate slices in the input T1 post-contrast MRI sequence following the connected-components method to further prune retained false-positive regions that are not connected across consecutive slices within the sequence thus do not belong to the aforementioned vascular input region. After performing operations disclosed and presented in this embodiment one obtains the delineated vascular input region without false positive detections (voxels incorrectly annotated as being part of the vascular input region and being removed from the segmentation mask following the undisclosed operations), thus the automatically obtained segmentation mask of the vascular input region is an effect of this set of operations performed sequentially as detailed above.

### Embodiment 7

The computer-implemented method, according to the invention, is also use for pharmacokinetic modeling to quantify the concentration of the contrast agent (CA) in brain tissue in a sequence of one or more DCE-MRI scans acquired for a subject of interest, comprising a mapping of voxels' intensities to contrast concentrations based on the CA magnetic relaxivity and patient's hematocrit with the pre-contrast T10 relaxation times derived from two or more MRI scans at different two or more flip angles of the magnetic field. In this method, the Tofts model (P. S. Tofts and A. G. Kermode, "Measurement of the blood-brain barrier permeability and leakage space using dynamic MR imaging. 1. Fundamental concepts", Magnetic Resonance in Medicine, vol. 17, no. 2, pp. 357-367, 1991) or any other compartment model known from the state of art (D. Flouri, D. Lesnic, and S. P. Sourbron, "Fitting the two-compartment model in DCE-MRI by linear inversion," Magnetic Resonance in Medicine, vol. 76, no. 3, pp. 998-1006, 2016) can be utilized in an invention to interpret the spatial and temporal information where two compartments correspond to blood plasma and abnormal extravascular extracellular space. The method comprises extracting three or more tissue parameters related to the compartment models including the influx volume transfer constant Ktrans, the volume of extravascular extracellular space (EES) - ve as well as the efflux rate constant kep=Ktrans/ve. The aforementioned compartment model consists of the plasma volume and a lesion leakage space and therefore the contrast agent effectively flows to EES and the lesion leakage space. The concentration of the contrast agent in the lesion leakage space in time t can be calculated as

$$Ct(t)=Ktrans\times(Cp(t)*exp(-kep\times t),$$

where * is convolution and it can be calculated by a numerical convolution or analytically using a Cp(t), being the vascular input function model or by other means. The vascular input function model in this invention may be calculated using the models widely adopted in the scientific literature, (P. S. Tofts and A. G. Kermode, "Measurement of the blood-brain barrier permeability and leakage space using dynamic MR imaging. 1. Fundamental concepts", Magnetic Resonance in Medicine, vol. 17, no. 2, pp. 357-367, 1991; M. R. Orton, et al., "Computationally efficient vascular input function models for quantitative kinetic modelling using DCE-MRI", Physics in Medicine Biology, vol. 53, p. 1225, feb 2008; J. Nalepa, et al., "Fully-automated deep learning-powered system for DCE-MRI analysis of brain tumors", Artificial Intelligence in Medicine, vol. 102, p. 101769, 2020) especially encompassing the bi-exponential model given as:

$$Cp(t)=A\times exp(-\alpha t)+B\times exp(-\beta t),$$

or a linear model given as:

$$Cp(t)=A\times t\times exp(-\alpha t)+B\times (exp(-\beta t)-exp(-\alpha t))$$

or a cubic model given as:

$$Cp(t)= A\times t^3\times exp(-\alpha t)+B\times (exp(-\beta t)-exp(-\alpha t))$$

or any combination of the aforementioned models.

As an effect of the operations performed sequentially and disclosed in this embodiment one obtains a set of three or more parametric maps of parameters related to the compartment models including the influx volume transfer constant Ktrans, the volume of extravascular extracellular space (EES) - ve as well as the efflux rate constant kep=Ktrans/ve obtained as numerical parameter maps (separate 3D parameter map for each extracted parameter where the parameters are extracted for each voxel stored in a storage medium as DICOM, NIFTI or other data format files).

**Embodiment 8**

The-computer-implemented method, according to the invention, of extracting radiomic features from the input region of interest, being an organ, a lesion, a specific area of an organ, a specific area of a lesion, or any combination of the above-mentioned regions of interest is disclosed and encompasses extracting at least one or more of the following features (let **X** denote the input volume containing $N_p$ voxels included in the regions of interest):

a. First Order Statistics features including:

i. Energy, being a measure of the magnitude of voxel values in an image given as

$$energy = \sum_{i=1}^{N_p} (\mathbf{X}(i) + c)^2 ,$$

where c is an optional constant that might be optionally used for shifting the intensity values in order to prevent having negative values in **X.**

ii. Total energy, being the value of Energy feature scaled by the volume of the voxel in cubic mm, given as

$$total\ energy = V_{voxel} \sum_{i=1}^{N_p} (\mathbf{X}(i) + c)^2 ,$$

where the meaning of c is as previously defined.

iii. Entropy, being the uncertainty/randomness measure in the image values, quantifying the average amount of information required to encode the image values. Entropy is given as

$$entropy = -\sum_{i=1}^{N_g} p(i) \log_2 \left(p(i) + \epsilon\right),$$

where epsilon corresponds to an arbitrarily selected small positive number.

iv. Minimum voxel's value.

v. $10^{th}$ percentile of the voxel's values.

vi. $90^{th}$ percentile of the voxel's value.

vii. Maximum voxel's value.

viii. Median voxel's value.

ix. Interquartile range of voxels' values.

x. Range of voxels' values.

xi. Mean absolute deviation of voxels' values, abbreviated as MAD, and given as

$$MAD = \frac{1}{N_p} \sum_{i=1}^{N_p} |\mathbf{X}(i) - \bar{X}|.$$

xii. Robust mean absolute deviation of voxels' values, abbreviated as rMAD and given as

$$rMAD = \frac{1}{N_{10-90}} \sum_{i=1}^{N_{10-90}} |\mathbf{X}_{10-90}(i) - \bar{X}_{10-90}|.$$

xiii. Root mean squared of voxels' values, abbreviated as RMS and given as

$$RMS = \sqrt{\frac{1}{N_p} \sum_{i=1}^{N_p} (\mathbf{X}(i) + c)^2},$$

with the meaning of c as discussed previously.

xiv. Standard deviation of voxels' values.

xv. Skewness of voxels' values given as

$$skewness = \frac{\mu_3}{\sigma^3} = \frac{\frac{1}{N_p} \sum_{i=1}^{N_p} (\mathbf{X}(i) - \bar{X})^3}{\left(\sqrt{\frac{1}{N_p} \sum_{i=1}^{N_p} (\mathbf{X}(i) - \bar{X})^2}\right)^3}$$

where $\mu 3$ is the $3^{rd}$ central moment.

xvi. Kurtosis of voxels' values given as

$$kurtosis = \frac{\mu_4}{\sigma^4} = \frac{\frac{1}{N_p}\sum_{i=1}^{N_p}\left(\mathbf{X}(i) - \bar{X}\right)^4}{\left(\frac{1}{N_p}\sum_{i=1}^{N_p}\left(\mathbf{X}(i) - \bar{X}\right)^2\right)^2},$$

where $\mu_4$ is the 4th central moment.

xvii. Variance of voxels' values given as

$$variance = \frac{1}{N_p}\sum_{i=1}^{N_p}\left(\mathbf{X}(i) - \bar{X}\right)^2.$$

xviii. Uniformity of voxels' values given as

$$uniformity = \sum_{i=1}^{N_g} p(i)^2.$$

b. Shape-based (3D) features including:

i. Mesh volume, calculated from the triangle mesh of the region of interest where for each face in the mesh its signed volume is calculated where it is the volume of the tetrahedron defined by the aforementioned face and the origin of the image and the sign is calculated and determined by the sign of the normal which faces either inward or outward the region of interest for which the mesh volume is calculated.
ii. Voxel (standard) volume.
iii. Surface area of the region of interest.
iv. Surface area to the volume ratio.
v. Sphericity given as

$$sphericity = \frac{\sqrt[3]{36\pi V^2}}{A},$$

where V is the volume and A is the surface area of the region of interest for which sphericity is calculated. The meaning of V and A remains the same for the following features.
vi. Compactness (version 1) given as

$$compactness\ 1 = \frac{V}{\sqrt{\pi A^3}}.$$

vii. Compactness (version 2) given as

$$compactness\ 2 = 36\pi\frac{V^2}{A^3}.$$

viii. Spherical disproportion given as

$$spherical\ disproportion = \frac{A}{4\pi R^2} = \frac{A}{\sqrt[3]{36\pi V^2}},$$

where R denotes the radius of a sphere with the same volume as the region of interest.

ix. Maximum 3D diameter where the maximum 3D diameter is defined as the largest pairwise Euclidean distance between the regions of interest surface mesh vertices.

x. Maximum 2D diameter within a slice defined as the largest pairwise Euclidean distance between the regions of interest surface mesh vertices in the axial plane.

xi. Maximum 2D diameter within a column defined as the largest pairwise Euclidean distance between the region of interest surface mesh vertices in the coronal plane.

xii. Maximum 2D diameter within a row defined as the largest pairwise Euclidean distance between the regions of interest surface mesh vertices in the sagittal plane.

xiii. Major axis length being the largest axis length of the ellipsoid enclosing the region of interest.

xiv. Minor axis length being the second-largest axis length of the ellipsoid enclosing the region of interest.

xv. Least axis length being the smallest axis length of the ellipsoid enclosing the region of interest.

xvi. Elongation being the square root of the ratio of the minor axis and major axis lengths.

xvii. Flatness being the square root of the ratio of the least axis and major axis lengths

c. Shape-based (2D) features calculated for the at least image with the largest area of the region of interest or all slices containing the region of interest in 3D including

i. Mesh surface (calculated as in 3D feature extractors but for a 2D case).

ii. Pixel surface being the multiplication of the number of pixels (voxels) and the surface area of a single pixel (voxel).

iii. Perimeter of the region of interest.

iv. Perimeter to surface ratio.

v. Sphericity given as

$$sphericity = \frac{2\pi R}{P} = \frac{2\sqrt{\pi A}}{P},$$

where P denotes the perimeter of the mesh in millimeters.

vi. Spherical disproportion given as

$$spherical\ disproportion = \frac{P}{2\sqrt{\pi A}}.$$

vii. Maximum 2D diameter of the region of interest.

viii. Major axis length being the largest axis length of the ellipsoid enclosing the region of interest.

ix. Minor axis length being the second-largest axis length of the ellipsoid enclosing the region of interest.

x. Elongation being the square root of the ratio of the minor and major axis lengths of the region of interest.

d. Gray Level Co-occurrence Matrix features including (the detailed mathematical formulae for all of the below-discussed features are presented in "Computational Radiomics System to Decode the Radiographic Phenotype" Cancer Research, vol. 77, pp. e104-e107, 10 2017.) J. J. van Griethuysen, et al.:

i. Autocorrelation,

ii. Joint average,

iii. Cluster prominence,

iv. Cluster shade,

v. Cluster tendency,

vi. Contrast,

vii. Correlation,
viii. Difference average,
ix. Difference entropy,
x. Joint energy,
xi. Joint entropy,
xii. Informational measure of correlation,
xiii. Inverse difference moment,
xiv. Maximal correlation coefficient,
xv. Inverse difference moment normalized,
xvi. Inverse difference,
xvii. Inverse difference normalized,
xviii. Inverse variance,
xix. Maximum probability,
xx. Sum average,
xxi. Sum entropy,
xxii. Sum of squares.

e. Gray Level Run Length Matrix features including (the detailed mathematical formulae for all of the below-discussed features are presented in "Computational Radiomics System to Decode the Radiographic Phenotype" Cancer Research, vol. 77, pp. e104-e107, 10 2017.) J. J. van Griethuysen, et al.

i. Short run emphasis,
ii. Long run emphasis,
iii. Gray level non-uniformity,
iv. Gray level non-uniformity normalized,
v. Run length non-uniformity,
vi. Run length non-uniformity normalized,
vii. Run percentage,
viii. Gray level variance,
ix. Run variance,
x. Run entropy,
xi. Low gray level run emphasis,
xii. High gray level run emphasis,
xiii. Short run low gray level emphasis,
xiv. Short run high gray level emphasis,
xv. Long run high gray level emphasis.

f. Gray Level Size Zone Matrix features including (the detailed mathematical formulae for all of the below-discussed features are presented in "Computational Radiomics System to Decode the Radiographic Phenotype" Cancer Research, vol. 77, pp. e104-e107, 10 2017.) J. J. van Griethuysen, et al.):

i. Small area emphasis,
ii. Large area emphasis,
iii. Gray level non-uniformity,
iv. Gray level non-uniformity normalized,
v. Size-zone non-uniformity,
vi. Size-zone non-uniformity normalized,
vii. Zone percentage,
viii. Gray level variance,
ix. Zone variance,
x. Zone entropy,
xi. Low gray level zone emphasis,
xii. Small area low gray level emphasis,
xiii. Small area high gray level emphasis,
xiv. Large area low gray level emphasis,
xv. Large area high gray level emphasis.

g. Neighboring Gray Tone Difference Matrix features including (the detailed mathematical formulae for all of the below-discussed features are presented in "Computational Radiomics System to Decode the Radiographic Phenotype" Cancer Research, vol. 77, pp. e104-e107, 10 2017.) J. J. van Griethuysen, et al.):

  i. Coarseness,
  ii. Contrast,
  iii. Busyness,
  iv. Complexity,
  v. Strength.

h. Gray Level Dependence Matrix features including (the detailed mathematical formulae for all of the below-discussed features are presented in "Computational Radiomics System to Decode the Radiographic Phenotype" Cancer Research, vol. 77, pp. e104-e107, 10 2017.) J. J. van Griethuysen, et al.):

  i. Small dependence emphasis,
  ii. Large dependence emphasis,
  iii. Gray level non-uniformity,
  iv. Dependence non-uniformity,
  v. Dependence non-uniformity normalized,
  vi. Gray level variance,
  vii. Dependence variance,
  viii. Dependence entropy,
  ix. Low gray level emphasis,
  x. High gray level emphasis,
  xi. Small dependence low gray level emphasis,
  xii. Large dependence low gray level emphasis,
  xiii. Large dependence high gray level emphasis.

As an effect of operations disclosed in this embodiment one obtains a feature set of extracted features as presented in a-h where the features are extracted from a specific region/volume of interest, being an entire scan, delineated tumorous region, the brain in a parametric map, a brain lesion or any of its subparts in MRI sequence or set of MRI sequences or in a parametric map or any combination of those.

**Embodiment 9**

The computer-implemented method, according to the invention, of optionally imputing missing data into the extracted feature vectors containing one or more features is revealed where the missing values are imputed for each extracted feature according to the distribution of these features in the dataset, and the imputed value can constitute the average of the available data points, the median value of the available data points or other statistical aggregation of the available data points. As an effect of this operation, one obtains a feature vector without any missing entries (therefore, the number of missing entries in the processed feature vector is equal to zero), and this feature vector can be directly used for further analysis.

**Embodiment 10**

The computer-implemented method, according to the invention, of selecting one or more features extracted from a region of interest is disclosed where the selection process aims at removing the features which are correlated with other features. In an embodiment, a Monte Carlo simulation is executed with at least 1000 repetitions in which at least 1000 subsets of at least 80% of all data points are picked (with overlaps across at least 1000 repetitions) and:

i. The most discriminative features (selected as important predictors in an least 95% of all repetitions) are selected where the discriminativeness of a feature is quantified through exploiting the $\chi 2$ test, and the features with $p<0.05$ with respect to the target.
j. Out of the selected features, the correlated features according to the Spearman's non-parametric correlation tests ($p<0.05$) are removed.

As an effect of this operation, one obtains one or more selected features contained in the feature vector. This feature vector after the feature selection process can contain at least one feature and the number of features may not be greater than the original number of features contained in the feature vector before the execution of the disclosed selection process.

## Embodiment 11

The computer-implemented method of elaborating a latent (embedded) representation of the input feature vector is revealed where a fully-connected autoencoder architecture is utilized with one input, one output and at least one hidden layer where the latent representation is elaborated through the unsupervised learning process and the latent (embedded) representation of the input data is extracted from at least one hidden layer of an autoencoder. The autoencoder architecture consists of two parts being the encoder and decoder, where the former is used to learn the features of the input data and focusing on the data dimensionality thus it focuses on transferring the input data into the embedding space (latent space) to elaborate its new data representation, and the latter is focused on turning the obtained compressed latent representation back to the original space and thus to restore the original data representation. The encoder in the autoencoder architecture comprises the one input layer and the one or more hidden layers, while the decoder consists of the one or more hidden layers and the output layer. The autoencoder fully-connected model obtains, as the input data, the original feature vector (here, the vector containing the extracted and selected features as presented in the previous embodiments) and thus generates an embedded (latent) representation version of the input data effectively transforming it into an embedded feature space. Without losing generalizability, if the input feature vector is given as v, then the embedded version of this vector in a fully-connected autoencoder containing one hidden layer becomes

$$H = f(Wv+b),$$

where W corresponds to the trainable weight matrix between the only one input layer and the hidden layer and b is the trainable bias vector. This embedded latent representation **H** is mapped back in the decoder (the latent representation was elaborated by the encoder) using the following formula:

$$v'=g(W'H+b'),$$

where **W'** and b' are the trainable weight matrix and bias vector between the only one hidden layer and the only one output layer. Of note f(.) and g(.) are non-linear or affine transformation functions that can be the sigmoid activation function or hyperbolic tangent activation function or other activation function. In the disclosed invention the autoencoder fully-connected architecture can include the one or more hidden layers and the latent representation of the input data can be the code (the output) of at least one hidden layer or a combination of the codes from at least one or more hidden layers aggregated by the flattening operation in the output embedded feature space. The loss function used to train the fully-connected architecture can be the square error or cross-entropy or any combination of thereof where the loss function may be enhanced with a regularization term such as a weight decay term (ranging from 0 to 1 and controlling the strength of regularization in order to avoid overfitting) and the autoencoder is trained using stochastic gradient descent or any other version of the stochastic gradient descent especially a version which uses an adaptive estimation of first-order and second-order moments. The fully-connected autoencoder in this invention may be replaced by other versions of fully-connected autoencoders especially including but not limited to denoising autoencoders reconstructing clean input from noise-contaminated input vector with the optimization objective set to reduce the error between the clean input vector and the reconstructed output of the decoder, stacked denoising autoencoders (trained layer by layer using stochastic gradient descent), contractive autoencoders in which an additional penalty term is added being the Jacobian F norm of hidden layer or hidden layers features, defined as the sum of squares of partial derivatives of implicit features to input units with this operation performed in order to control the recessive features. As an effect of the operations disclosed in this embodiment one obtains a new data representation, i.e., embedded (latent) representation of the original feature set which can be compressed and the size of this latent data representation is controlled by a hyperparameter denoting the number of features forming this latent data representation and the number of layers from which the latent data representation is extracted before the flattening operation. The new data representation is used for further analysis which may involve but is not limited to unsupervised clustering or supervised classification or supervised regression using a downstream machine learning model.

## Embodiment 12

The method according to the invention can be used on computer devices known from the state of the art. In the embodiment, a computer-readable storage medium is disclosed consisting of instructions which, when the computer program is executed by a processor, cause the processor to carry out the steps of:

k. Receiving at least one DCE-MRI study of a subject containing two or more MRI scans of the brain acquired in two or more consecutive time steps wherein the at least one image comprises a brain lesion as disclosed in the previous embodiments.

l. Optionally co-registering the available MRI sequences within an input DCE-MRI to a reference MRI sequence if the sequences are not co-registered as disclosed in the previous embodiments.

m. Standardizing the input DCE-MRI study for each MRI sequence separately using the z-score method with the parameters of the method obtained based on the training DCE-MRI studies (images) stored in a storage medium, e.g., local disk drive, PACS server or any other storage mediumas disclosed in the previous embodiments.

n. Segmenting (identifying the boundaries of) the brain tissue in each DCE-MRI scan and in each available MRI sequence separately or collectively (T1-weighted and/or T1 post-contrast and/or T2-weighted and/or T2-FLAIR) using a deep learning model or a combination of deep learning models trained, prepared and ensembled as disclosed in the previous embodiments.

o. Segmenting (identifying the boundaries of) the brain lesion in each DCE-MRI scan and in each available MRI sequence (T1-weighted and/or T1 post-contrast and/or T2-weighted and/or T2-FLAIR) using a deep learning model or a combination of deep learning models trained, prepared and ensembled as disclosed in the previous embodiments.

p. Extracting features using the feature extractors detailed in the previous embodiments from at least one of the following regions of interest (ROIs):

i. Brain tissue (whole brain after brain extraction/skull stripping) in one or more MRI sequences, i.e., T2-FLAIR, T2-weighted, T1 pre-contrast and T1 post-contrast;

ii. Brain lesion of interest in one or more MRI sequences, i.e., T2-FLAIR, T2-weighted, T1 pre-contrast and T1 post-contrast,

iii. Full DCE-MRI scan in one or more MRI sequences, i.e., T2-FLAIR, T2-weighted, T1 pre-contrast and T1 post-contrast,

iv. Parametric maps (Ktrans and or ve) obtained for the DCE-MRI data under the study.

q. Decreasing the dimensionality of the feature space being a sum of all features extracted from all ROIs stacked together in a single highly-dimensional feature vector through (as disclosed in the previous embodiments):

i. Selecting the most informative and discriminative features from the feature vectors encompassing all extracted features from all ROIs using the feature extractors detailed in the previous embodiments,

ii. Elaborating a latent (embedded) representation of through unsupervised learning of an autoencoder deep learning architecture containing one input, at least one hidden and at one output layer where the latent representation is extracted from at least one hidden layer of the autoencoder architecture.

r. Feeding the elaborated data representation (embedding, latent representation) into a supervised machine learning model such as a support vector machine, random forest, extreme boosting algorithm, k-nearest neighbor algorithm or other algorithm benefiting from labeled training examples for either training (during the training phase which focuses on optimizing the trainable parameters of a selected machine learning model according to the specific optimizers commonly used for each model) or for inference, i.e., elaborating the output class label or a specific value of the target, depending on the downstream task (classification or regression).

s. Optionally feeding the elaborated data representation (embedding, latent representation) into an unsupervised machine learning model, specifically focusing on unsupervised clustering of the data points (available historical DCE-MRI studies of one or more patients) into coherent clusters (groups) of similar characteristics according to the k-means method, x-means method, clustering by passing messages method or other unsupervised clustering methods either parametric or non-parametric, with the former method requiring defining the number of clusters (e.g., k in the k-means method).

t. Generating the resulting report of the analysis in a DICOM-RT format or a PDF file including at least but not limited to:

i. Original DCE-MRI data (either all slices or a subset of all slices containing ROIs where a slice corresponds to a single 2D image in one MRI sequence) containing all available MRI sequences,

ii. Semantic segmentation of the input DCE-MRI data containing all regions of interest, being the brain tissue and/or brain lesion,

iii. Extracted DCE-MRI parametric maps of Ktrans and ve.

iv. Extracted predictions obtained using supervised machine learning models for the downstream task of interest which may include but is not limited to predicting the survival time of the patient under study, predicting the short, medium and long term clinical benefits of the current treatment optionally framed as a binary classification task for each short, medium and long term analysis (i.e., 1 - positive clinical impact, 0 - negative, no or negligible clinical impact of the currently designed treatment pathway for a patient under study).

v. Extracted cluster (group) label assigned to the study of interest (i.e., the DCE-MRI study) directly determining to which the input DCE-MRI study had been assigned according to the extracted features.

vi. Hyperparameters of the analysis containing at least the version of the segmentation method used to delineate the brain as well as the brain lesion together with the version of the method used for pharmacokinetic modeling as well as the version of the feature extraction module used for extracting the features from the regions of interest.

vii. Transferring the generated report through a communication medium from the Processor to the storage system (e.g., PACS or any other storage medium) for archiving.

**Embodiment 13**

In an embodiment, a method of diagnosing or monitoring brain tumors in a subject is disclosed, the method comprising using the method of any preceding embodiments. The method of diagnosing or monitoring brain tumors disclosed in this invention relates to objectively tracking (in the consecutive time points in which DCE-MRI studies are acquired for a subject of interest) the measures and characteristics of the brain tumor or brain tumors extracted from input DCE-MRI scans in fully automatic (hands-free) thus objective manner and optimizing the clinical actions accordingly while exploiting other clinically acquired information about the patient conditions. The undisclosed system allows for automatic and reproducible extraction of features related to the both structural and functional characteristics of the tumorous regions as well as to other regions of the input DCE-MRI scans of a subject where the extracted characteristics are saved and stored in a storage medium and may be accessed at a later date for further analysis.

**Claims**

1. A computer-implemented method of processing DCE-MRI scan images comprising a brain of a subject under study and comprising a brain lesion to detect and automatically segment (delineate) and extracting radiomic features from DCE-MRI image data as well as from parametric maps **characterized in that** quantifying functional characteristics of the lesion, and/or predicting the survival time of the patient under study, predicting the short, medium and long term clinical benefits of the current treatment in the subject, the method comprising the steps of:

   a. Receiving at least two or more DCE-MRI scans of a subject acquired in consecutive time points after injecting the contrast agent for a subject, optionally comprising receiving annotations (delineations of at least region of interest) associated with the received DCE-MRI scan images; and
   b. Pre-processing the received DCE-MRI scan images, wherein processing comprises:

      i. Selecting one or more MRI sequences for processing, and/or
      ii. co-registering MRI sequences to a selected MRI sequence

2. The computer-implemented method according to claim 1 **characterized in that** comprises the step of co-registering the remaining at least one MRI sequence image with the selected reference MRI sequence image comprises performing a rigid co-registration and/or a deformable co-registration and/or any combination thereof.

3. The computer-implemented method according to any one of claims 1 - 2 **characterized in that** it contains one or more trained machine-learning models to detect brain and a brain lesion in DCE-MRI scan images comprising a brain, the method comprising the steps of:

   a. receiving a training dataset, the training dataset comprising a plurality of DCE-MRI scan images from a plurality of subjects, the plurality of DCE-MRI scan images comprising at least two DCE-MRI scan images from each subject, and wherein the at least two DCE-MRI scan images from each subject comprise the brain of the subject and a brain lesion of subject, and wherein the at least two DCE-MRI scan images from each subject are processed,
   b. training the one or more machine-learning models using the received training dataset to obtain one or more trained machine-learning models, wherein training the one or more machine-learning models comprises, for each processed at least two DCE-MRI scan images from each subject:

i. segmenting objects of interest within the DCE-MRI scan images based on the selected one or more MRI sequences out of T2-FLAIR, T2, T1 pre-contrast and T1 post-contrast sequence, to delineate the brain; and/or

ii. segmenting objects of interest within the brain mask of the input DCE-MRI scan images based on the selected one or more MRI sequences out of T2-FLAIR, T2, T1 pre-contrast and T1 post-contrast sequence to delineate the brain lesion.

c. optionally outputting the one or more trained machine-learning models.

4. The computer-implemented method according to claim 3 **characterized in that** the step of training the one or more machine-learning models using the received training dataset comprises training a single machine-learning model using the training dataset, training a single machine-learning model using one or more of a plurality of subsets of the training dataset, training multiple machine-learning models using the training dataset, training multiple machine-learning models using one or more of a plurality of subsets of the training dataset.

5. The computer-implemented method according to claims 3-4 **characterized in that** the one or more machine-learning models are UNets (nn-UNets) models.

6. The computer-implemented method according to claims 3-5 **characterized in that** further comprising normalizing the processed DCE-MRI scan images, wherein normalizing comprises performing a z-score normalization for each MRI sequence separately.

7. The computer-implemented method according to claims 1-6 **characterized in that** it contains one or more machine-learning models, trained to detect and delineate the brain and a brain lesion in input DCE-MRI scan images comprising a brain of a subject, the method comprising the steps of:

a. receiving and processing at least two DCE-MRI scan images comprising the brain,
b. segmenting objects of interest (the brain and a brain lesion) within the scan; and/or
c. calculating at least one probability map associated with the brain and/or a brain lesion of the subject under the study.

8. The computer - implemented method according to claim 7 **characterized in that** objects of interest within the brain comprise whole tumor lesions, enhancing tumor area, peritumoral edema area, necrotic area and non-enhancing tumor core or any combination thereof.

9. The computer-implemented method according to claims any of the claims 1-8 of determining the brain vascular input region in a temporal series of one or more co-registered T1 post-contrast MRI sequences comprising of the following steps:

a. Identifying high-intensity voxels in the T1 post-contrast MRI sequences following a thresholding method wherein the threshold Tr is determined for each T1 post-contrast MRI sequence separately and is related to the maximum voxel's intensity within the input T1 post-contrast MRI sequence and Tr is no less than 75% of the maximal voxel's intensity,
b. Removing false-positive highly-intensive voxels within the input T1 post-contrast MRI sequence and retaining only areas positioned in the low part of the T1 post-contrast MRI sequence corresponding to the G, H and I sections of the brain in the Talairach coordinates,
c. Calculating shape characteristics of the retained regions through extracting at least one of the following features or a combination of thereof and other shape characteristics calculated for the highly-intensive retained areas: eccentricity and shape factor,
d. Performing 3D analysis across the T1 slices following the connected-components method to prune retained false-positive regions which are not connected across the majority of consecutive slices (at least 80% of all slices with corresponding highly-intensive retained areas).

10. The computer-implemented method according to any one of claims 1 - 9 **characterized in that** extracting and selecting radiomic features and optionally elaborating a latent representation of the feature space from the input region of interest, being a brain, a lesion, a specific area of an organ, a specific area of a lesion, parametric maps of the brain being the values of the extracted Ktrans and/or ve parameters elaborated using the pharmacokinetic modeling method, parametric maps of the brain lesion being the values of the extracted Ktrans and/or ve parameters elaborated using the pharmacokinetic modeling method or any combination of the above-mentioned regions of interest including the following steps:

a. Extraction of radiomic features from any combination of regions of interest using feature extractors,
b. Selection of the one or more most discriminative features following the Monte Carlo simulation method and the correlation analysis,
c. Optionally imputing missing data for each extracted feature through injecting aggregated feature values obtained following the method,
d. Optionally elaborating a latent (embedded) representation of the input feature vector using a fully-convolutional autoencoder deep learning architecture following the method,

11. The computer-implemented method according to any one of claims 1 - 10 **characterized in that** obtaining one or more trained machine-learning models to predict the survival time of the patient under study and/or predicting the short, medium and long term clinical benefits of treatment wherein the step of training the one or more machine-learning models using the received training dataset comprises training a single machine-learning model using the training dataset, training a single machine-learning model using one or more of a plurality of subsets of the training dataset, training multiple machine-learning models using the training dataset, training multiple machine-learning models using one or more of a plurality of subsets of the training dataset optionally outputting the trained machine learning model or a plurality of machine learning models.

12. The computer-implemented method according to any one of claims 1-11 **characterized in that** predicting the survival time of the patient under study and/or predicting the short, medium and long term clinical benefits of treatment and using the machine learning models and performing unsupervised clustering (profiling) of the DCE-MRI data of newly acquired and unseen patients comprising the following steps detailed in the previously-discussed claims and appropriate embodiments:

a. Selecting and pre-processing the DCE-MRI data for analysis,
b. Extracting and selecting radiomic features from the selected DCE-MRI data for the regions of interest,
c. Optionally performing data imputation in the case of missing data,
d. Feeding the feature vectors into machine learning models trained in a supervised way for the specific downstream task - predicting the survival time of the patient under study and/or predicting the short, medium and long term clinical benefits of treatment in a subject, and obtaining the prediction,
e. Feeding the feature vectors into unsupervised machine learning models for unsupervised clustering to profile the DCE-MRI data under study and to assign a cluster label based on the historical data.

13. The computer-implemented method according to any one of claims 1-12 **characterized in that** predicting the survival time of the patient under study and/or predicting the short, medium and long term clinical benefits of treatment in a subject and/or profiling patients through performing unsupervised clustering, the method comprising the report generation encompassing the results and experimental hyperparameters thus ensuring full traceability and reproducibility of the DCE-MRI analysis.

Figure 1

Figure 2

Figure 3

Figure 4

A)

B)

Figure 5

Europäisches
Patentamt

European
Patent Office

Office européen
des brevets

# EUROPEAN SEARCH REPORT

**Application Number**

EP 24 15 8266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NALEPA JAKUB ET AL: "Fully-automated deep learning-powered system for DCE-MRI analysis of brain tumors", ARTIFICIAL INTELLIGENCE IN MEDICINE, ELSEVIER, NL, vol. 102, 27 November 2019 (2019-11-27), XP086012263, ISSN: 0933-3657, DOI: 10.1016/J.ARTMED.2019.101769 [retrieved on 2019-11-27] | 1-8,10, 11 | INV. G06T7/00 |
| A | * abstract * * sections 1. Introduction; 1.2.3 Machine learning-powered algorithms; 2.1 Brain tumor segmentation; 2.1.1 Data pre-processing; section 2.2 Determination of vascular input region; 2.3 Pharmacokinetic modeling; 3.2 Brain tumor segmentation benchmark dataset (BraTS) * | 9,12,13 | |
| A | BJÃRNERUD ATLE ET AL: "A Fully Automated Method for Quantitative Cerebral Hemodynamic Analysis Using DSCâ MRI", JOURNAL OF CEREBRAL BLOOD FLOW AND METABOLISM, SAGE PUBLICATIONS LTD, US , vol. 30, no. 5 1 May 2010 (2010-05-01), pages 1066-1078, XP009555348, ISSN: 1559-7016, DOI: 10.1038/JCBFM.2010.4 Retrieved from the Internet: URL:https://journals.sagepub.com/openurl?r ft.date=2010&rft.atitle=A+Fully+Automated+ Method+for+Quantitative+Cerebral+Hemodynam ic+Analysis+Using+DSC%E2%80%93MRI&rft.issu e=5&rft.issn=0271-678X&rft.volume=30&rft.g enre=article&rft.spage=1066&url_ver=Z39.88 -2004 [retrieved on 2024-07-18] * abstract * | 1-13 | **TECHNICAL FIELDS SEARCHED (IPC)** G06T |

The present search report has been drawn up for all claims

| Place of search | Date of completion of the search | Examiner |
|---|---|---|
| Munich | 22 July 2024 | Rimassa, Simone |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11593940 B2
- US 10872684 B2
- WO 2020076135 A1
- WO 2017106280 A1
- US 10769791 B2
- CN 109410188 A
- CN 112419247 A
- CN 116664590 A
- CN 114359262 A
- US 2021169349 A1
- WO 2019190641 A1
- WO 2019241266 A1
- EP 2419849 A2

**Non-patent literature cited in the description**

- **S. RASHEED** ; **K. REHMAN** ; **M. S. H. AKASH**. An insight into the risk factors of brain tumors and their therapeutic interventions. *Biomedicine & Pharmacotherapy*, 2021, vol. 143, 112119
- **M. PARILLO et al.** Interrater reliability of Brain Tumor Reporting and Data System (BT-RADS) in the follow up of adult primary brain tumors: a single institution experience in Italy. *Quantitative Imaging in Medicine and Surgery*, 2023, vol. 13 (11)
- **M. VISSER et al.** Inter-rater agreement in glioma segmentations on longitudinal MRI. *NeuroImage: Clinical*, 2019, vol. 22, 101727
- **J. E. VILLANUEVA-MEYER** ; **M. C. MABRAY** ; **S. CHA**. Current clinical brain tumor imaging. *Neurosurgery*, 2017, vol. 81 (3)
- **H. BAGHER-EBADIAN et al.** Dynamic contrast enhanced (DCE) MRI estimation of vascular parameters using knowledge-based adaptive models. *Scientific Reports*, June 2023, vol. 13, 9672
- **YANKEELOV E. THOMAS** ; **GORE C. JOHN**. Dynamic Contrast Enhanced Magnetic Resonance Imaging in Oncology: Theory, Data Acquisition, Analysis, and Examples. *Current Medical Imaging*, 2007, vol. 3 (2)
- **S. BAUER et al.** Atlas-based segmentation of brain tumor images using a markov random field-based tumor growth model and non-rigid registration. *Annual International Conference of the IEEE Engineering in Medicine and Biology*, 2010, 4080-4083
- **Z. TANG et al.** Multi-atlas segmentation of MR tumor brain images using low-rank based image recovery. *IEEE Transactions on Medical Imaging*, 2018, vol. 37 (10), 2224-2235
- **A. WADHWA** ; **A. BHARDWAJ** ; **V. SINGH VERMA**. A review on brain tumor segmentation of MRI images. *Magnetic Resonance Imaging*, vol. 61 (20190), 247-259
- **M. SOLTANINEJAD et al.** Automated brain tumour detection and segmentation using superpixel-based extremely randomized trees in FLAIR MRI. *International Journal of Computer Assisted Radiology and Surgery*, February 2017, vol. 12, 183-203
- **S. ALSUBAI et al.** Ensemble deep learning for brain tumor detection. *Frontiers in Computational Neuroscience*, 2022, vol. 16
- **ZHENG, X. ZHU** ; **W. GUO**. Brain tumour segmentation based on an improved U-net. *BMC Medical Imaging*, November 2022, vol. 22, 199
- **G. DHEEPA** ; **P. L. CHITHRA**. An efficient encoder-decoder CNN for brain tumor segmentation in MRI images. *IETE Journal of Research*, 2022, vol. 0 (0), 1-12
- **M. F. AHAMED et al.** A review on brain tumor segmentation based on deep learning methods with federated learning techniques. *Computerized Medical Imaging and Graphics*, 2023, vol. 110, 102313
- **M. ADEWOLE et al.** challenge 2023: Glioma segmentation in Sub-Saharan Africa patient population (BraTS-Africa). *The brain tumor segmentation (BraTS)*, 2023
- **Z. LIU et al.** Fedcl: Federated contrastive learning for multi-center medical image classification. *Pattern Recognition*, 2023, vol. 143, 109739
- **J. NALEPA et al.** Deep learning automates bidimensional and volumetric tumor burden measurement from MRI in pre- and post-operative glioblastoma patients. *Computers in Biology and Medicine*, 2023, vol. 154, 106603
- **A. ZWANENBURG** ; **M. VALLIERES et al.** The Image Biomarker Standardization Initiative: Standardized Quantitative Radiomics for High-Throughput Image-based Phenotyping. *Radiology*, 2020, vol. 295 (2), 328-338

- **J.-C. WANG et al.** A radiomics-based model on non-contrast CT for predicting cirrhosis: make the most of image data. *Biomarker Research*, September 2020, vol. 8, 47
- **W. JI et al.** Machine-learning analysis of contrast-enhanced CT radiomics predicts recurrence of hepatocellular carcinoma after resection: A multi-institutional study. *eBioMedicine*, December 2019, vol. 50, 156-165
- **B. K. BUDAI et al.** Three-dimensional CT texture analysis of anatomic liver segments can differentiate between low-grade and high-grade fibrosis. *BMC Medical Imaging*, 2020, vol. 20 (1), 108
- **G. SINGH et al.** Radiomics and radiogenomics in gliomas: a contemporary update. *British Journal of Cancer*, August 2021, vol. 125, 641-657
- **A. M. ALDAWSARI et al.** The role and potential of using quantitative MRI biomarkers for imaging guidance in brain cancer radiotherapy treatment planning: A systematic review. *Physics and Imaging in Radiation Oncology*, 2023, vol. 27, 100476
- **H. BAGHER-EBADIAN et al.** Radiomics characterization of tissues in an animal brain tumor model imaged using dynamic contrast enhanced (DCE) MRI. *Scientific Reports*, July 2023, vol. 13, 10693
- **SUHAIL PARVAZE et al.** Radiomics-based evaluation and possible characterization of dynamic contrast enhanced (DCE) perfusion derived different sub-regions of glioblastoma. *European Journal of Radiology*, 2023, vol. 159, 110655
- **P. S. TOFTS** ; **A. G. KERMODE**. Measurement of the blood-brain barrier permeability and leakage space using dynamic MR imaging. 1. Fundamental concepts. *Magnetic Resonance in Medicine*, 1991, vol. 17 (2), 357-367
- **D. FLOURI** ; **D. LESNIC** ; **S. P. SOURBRON**. Fitting the two-compartment model in DCE-MRI by linear inversion. *Magnetic Resonance in Medicine*, 2016, vol. 76 (3), 998-1006
- **M. R. ORTON et al.** Computationally efficient vascular input function models for quantitative kinetic modelling using DCE-MRI. *Physics in Medicine Biology*, February 2008, vol. 53, 1225
- **J. NALEPA et al.** Fully-automated deep learning-powered system for DCE-MRI analysis of brain tumors. *Artificial Intelligence in Medicine*, 2020, vol. 102, 101769
- Computational Radiomics System to Decode the Radiographic Phenotype. *Cancer Research*, 2017, vol. 77 (10), e104-e107